# EUROPEAN PATENT APPLICATION

(11) **EP 3 382 573 A1**
(43) Date of publication of application: **03.10.2018**
(21) Application number: 16868621.0
(22) Date of filing: 24.11.2016
(51) Int. Cl.: G06F 17/30

(54) **INFORMATION PROCESSING SYSTEM AND INFORMATION PROCESSING METHOD**

(30) Priority: 26.11.2015 JP 2015230947
(71) Applicant: Lifull Co., Ltd., Chiyoda-ku Tokyo 102-0083 (JP)
(72) Inventor: ISHIDA, Yota, Tokyo 1020083 (JP); KIYOTA, Yoji, Tokyo 1020083 (JP); AKIYAMA, Go, Tokyo 1020083 (JP)
(74) Representative: D Young & Co LLP
(86) International application number: PCT/JP2016/084793
(87) International publication number: WO 2017/090678

(57) **Abstract**

Provided are an information processing system and an information processing method with which real estate property information can be provided favorably in accordance with image content. Included are means for managing a plurality of images relating to a real estate property together with image evaluation information that represents objects shown on the images and is attached thereto using a first evaluation model generated by machine learning, means for managing entry evaluation values that relate to entries respectively representing a plurality of real estate properties, and are calculated using one or more pieces of the image evaluation information associated with each of the plurality of real estate properties, and means for outputting a list of the entries relating to the plurality of real estate properties, an order of the entries on the list being determined in accordance with the entry evaluation values.

## Description

### Technical Field

Several aspects of the present invention relate to an information processing system and an information processing method.

### Background Art

In recent years, various services are provided on the Internet to provide real estate property information about real estate property, including houses and condominiums, for example. Patent Document 1, for example, discloses a system that allows a prospective tenant to view a rental property from a terminal device using a camera installed in the property.

In addition, services for providing information relating to real estate properties on the Internet may be provided using various images associated with the real estate property, such as a floor plan of a dwelling, photographs showing the interior of the dwelling, and photographs of the local environment, for example.

### Citation List

### Patent Document

Patent Document 1: Re-publication of PCT International Publication No. WO 2005/055104

### Summary

### Technical Problem

When real estate property information is provided using images, the images may conceivably be used not only as material for promoting understanding of the real estate property, but also as material that affects the quality of the real estate property information and material for determining a method of providing the real estate property information. In Patent Document 1, however, these points are not taken into consideration.

Several aspects of the present invention have been designed in consideration of the problem described above, and an object thereof is to provide an information processing system and an information processing method with which real estate property information can be provided favorably in accordance with image content. Solution to Problem

An information processing system according to the present invention includes means for managing a plurality of images relating to a real estate property together with image evaluation information that represents objects shown on the images and is attached thereto using a first evaluation model generated by machine learning, means for managing entry evaluation values that relate to entries respectively representing a plurality of real estate properties, and are calculated using one or more pieces of the image evaluation information associated with each of the plurality of real estate properties, and means for outputting a list of the entries relating to the plurality of real estate properties, the order of the entries on the list being determined in accordance with the entry evaluation values.

An information processing system according to the present invention includes means for managing a plurality of images relating to a real estate property together with image evaluation information that represents objects shown on the images and is attached thereto using an evaluation model generated by machine learning, means for managing a plurality of entries respectively representing a plurality of real estate properties with which images to which the image evaluation information is attached are associated, and means for outputting a list of the plurality of entries including images of an object that is in a specific category and has different specifications on the basis of the image evaluation information.

An information processing method according to the present invention is executed by an information processing system, and includes the steps of managing a plurality of images relating to a real estate property together with image evaluation information that represents objects shown on the images and is attached thereto using a first evaluation model generated by machine learning, managing entry evaluation values that relate to entries respectively representing a plurality of real estate properties, and are calculated using one or more pieces of the image evaluation information associated with each of the plurality of real estate properties, and outputting a list of the entries relating to the plurality of real estate properties, an order of the entries on the list being determined in accordance with the entry evaluation values.

An information processing method according to the present invention is executed by an information processing system, and includes the steps of managing a plurality of images relating to a real estate property together with image evaluation information that represents objects shown on the images and is attached thereto using an evaluation model generated by machine learning, managing a plurality of entries respectively representing a plurality of real estate properties with which images to which the image evaluation information is attached are associated, and outputting a list of the plurality of entries including images of an object that is in a specific category and has different specifications on the basis of the image evaluation information.

Note that in the present invention, the terms "unit", "means", "device", and "system" do not only signify physical means, and include cases in which functions of the "unit", "means", "device", and "system" are realized by software. Further, the functions of one "unit", "means", "device", or "system" may be realized by two or more physical means or devices, and the functions of two or more "units", "means", "devices", or "systems" may be realized by a single physical means or device.

### Brief Description of Drawings

Fig. 1 is a view showing an example configuration of a real estate property information provision system according to an embodiment.
Fig. 2 is a view showing an example configuration of a real estate property entry database according to this embodiment.
Fig. 3 is a view showing an example configuration of a real estate property information provision server according to this embodiment.
Fig. 4 is a flowchart showing a flow of processing executed in the real estate property information provision system according to this embodiment.
Fig. 5 is a flowchart showing a flow of processing executed in the real estate property information provision system according to this embodiment.
Fig. 6 is a flowchart showing a flow of processing executed in the real estate property information provision system according to this embodiment.
Fig. 7 is a view showing a specific example of a hardware configuration of the real estate property information provision system according to this embodiment.

### Description of Embodiments

An embodiment of the present invention will be described below with reference to the figures. Note, however, that the embodiment to be described below is merely an example, and is not intended to exclude various amendments and technical applications not described explicitly below. In other words, the present invention may be implemented after undergoing various amendments within a scope not departing from the spirit thereof. Further, in the following description of the figures, identical or similar parts have been allocated identical or similar reference numerals. The figures are schematic, and do not necessarily reflect actual dimensions, ratios, and so on. Moreover, dimensional relationships and ratios of identical parts may differ between the figures.

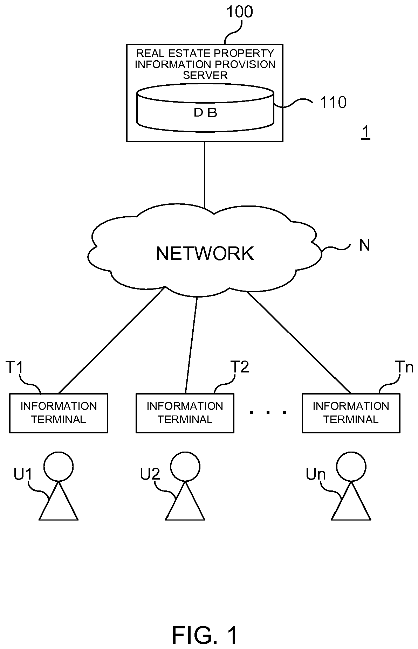

Figs. 1 to 7 are views illustrating an embodiment. Referring to these figures, this embodiment will be described below in accordance with the following flow. First, in "1", an outline of a real estate property information provision system according to this embodiment will be described. Next, in "2", a specific example of a configuration of a database managed by a real estate property information provision server of the real estate property information provision system will be described. In "3", a functional configuration of the real estate property information provision server will be described. In "4", a flow of processing executed by the real estate property information provision server will be described. In "5", a specific example of a hardware configuration with which the real estate property information provision server can be realized will be described. Finally, from "6" onward, effects and so on of this embodiment will be described.

### (1. Outline)

First, referring to Fig. 1, an outline of a configuration of a real estate property information provision system 1 according to this embodiment and processing executed thereby will be described. The real estate property information provision system 1 includes a real estate property information provision server 100, and information terminals T1 to Tn (also referred to hereafter collectively as information terminals T or an information terminal T). The real estate property information provision server 100 and the information terminals T are respectively connected to a network N either by wire or wirelessly so as to be capable of communicating with each other over the network N. Users U1 to Un (also referred to hereafter collectively as users U or a user U) operate the information terminals T.

In this embodiment, the real estate property information provision server 100 includes a database (DB) 110 for managing real estate property information, and provides the information terminals T connected to the network N, the network N being constituted by the Internet, for example, with real estate property information relating to a large number of real estate properties in the form of a website, for example. The real estate properties for which information is provided by the real estate property information provision server 100 may include various products, such as real estate for rent or sale, including new-build or older houses and condominiums, automobiles, and so on, for example. When the user U connects to the website provided by the real estate property information provision server 100 using a browser of the information terminal T, for example, web page information on which to input search conditions is transmitted to the information terminal T from the real estate property information provision server 100. When the user U inputs a real estate property condition onto the web page, the condition is transmitted to the real estate property information provision server 100 from the information terminal T. The real estate property information provision server 100 retrieves real estate properties matching the condition, generates a web page pertaining to a list of real estate property information relating to the matching real estate properties, and transmits information about the web page to the information terminal T. As a result, the user U can check the real estate property information. The following description will focus on a case in which the real estate properties for which the real estate property information provision server 100 provides information are real estate properties such as houses and condominiums.

The real estate property information provision server 100 manages the information relating to the real estate properties, to be provided to the information terminal T, on the database. Hereafter, the information relating to the real estate properties that is managed by the real estate property information provision server 100 will be referred to as real estate property entries.

At this time, by evaluating the real estate properties on the basis of images included in each real estate property entry, a list of real estate property entries can be generated in a favorable order by the real estate property information provision server 100 and presented to the user U via the information terminal T.

### (2. Specific example of database configuration)

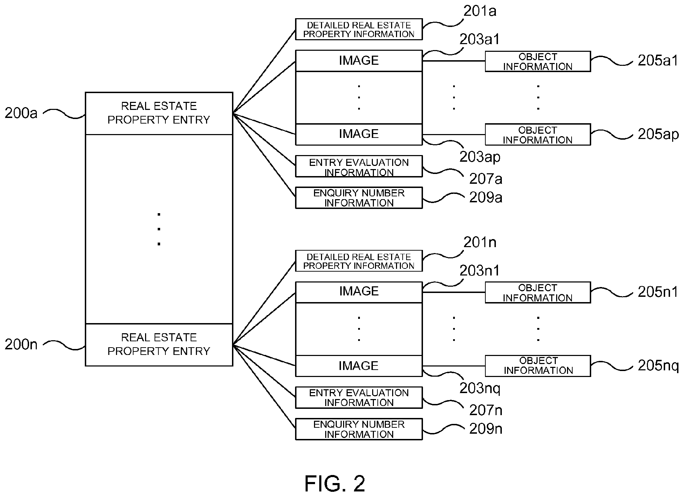

As described above, the real estate property information provision server 100 manages real estate property entries 200 corresponding respectively to the real estate properties for which information is to be provided. Fig. 2 shows a specific example of the configuration of a database storing real estate property entries 200a to 200n (also referred to collectively hereafter as real estate property entries 200 or a real estate property entry 200) managed by the real estate property information provision server 100.

Each real estate property entry 200 includes detailed real estate property information 201 (detailed real estate property information 201a to 201n will be referred to collectively as detailed real estate property information 201), images 203 (images 203a1 to 203ap and 203n1 to 203nq will be referred to collectively as images 203 or an image 203), entry evaluation information 207 (entry evaluation information 207a to 207n will be referred to collectively as entry evaluation information 207), and enquiry number information 209 (enquiry number information 209a to 209n will be referred to collectively as enquiry number information 209). Further, object information 205 (object information 205a1 to 205ap and 205n1 to 205nq will be referred to collectively as object information 205) is associated with each image 203.

The detailed real estate property information 201 is information such as specifications relating to the real estate property indicated by the real estate property entry 200. When the real estate property is real estate, the detailed real estate property information 201 may include information such as the closest train station, the distance to the closest train station, the location, the age of the property, the direction the property faces, the floor area, the balcony area, and a floor plan, for example.

The images 203 are images relating to the real estate property indicated by the real estate property entry 200. The images 203 may include a photograph of the exterior, a floor plan, indoor photographs of a living room, a kitchen, a bathroom, a toilet, and so on, photographs relating to shared spaces such as the entrance and shared facilities, and photographs of local parks, supermarkets, and so on, for example.

Here, in this embodiment, the object information 205 is associated with each of the images 203. The object information 205 is information indicating the object shown on each image 203, and in this embodiment, the object information 205 is generated by inputting the image 203 into an evaluation model generated by machine learning. The generated object information 205 is attached to the image 203. The evaluation model is generated by applying the image 203 and category information indicating the subject of the image 203 (for example, tag information indicating a floor plan, a kitchen, a living room, a bathroom, a toilet, an external view, a local public facility, a local commercial facility, a road, alphanumerical information, miscellaneous, and so on), for example, as correct answer data. As a result, when the image 203 is input into the generated evaluation model, a vector having respective object resemblances (a floor plan resemblance, a kitchen resemblance, a living room resemblance, and so on) of the image 203 as parameters is calculated. The object information 205 may take the form of the vector indicating the likelihood of each object, or tag information relating to the likelihood having the largest value or a likelihood having a value that exceeds a threshold, among the likelihoods of the respective objects expressed as the parameters of the vector. In the latter case, when, for example, the kitchen resemblance has the largest value among the parameters of the vector, and the value of the kitchen resemblance exceeds a threshold, the image 203 is determined to be a photograph of the kitchen, and therefore tag information indicating the category "kitchen" is attached to the image 203 as the object information 205.

The entry evaluation information 207 is information indicating an evaluation value used to evaluate the real estate property entry 200. For example, in this embodiment, the entry evaluation information 207 can be generated in accordance with the images 203 associated with the real estate property entry 200. The entry evaluation information 207 represents a number of categories of the images, for example. The categories are constituted by, for example, "1: Floor plan", "2: Kitchen", "3: Living room", "4: Bathroom", "5: Toilet", "6: External view", "7: Local public facility", "8: Local commercial facility", "9: Road", "10: Alphanumerical information", and "11: Miscellaneous", meaning none of the above. For example, in a case where the real estate property entry 200 includes a plurality of images in respective categories including two images of a kitchen and three images of a living room, the kitchen category takes a value of 1 point and the living room category takes a value of 1 point, giving a total value of 2 points representing the two categories. In other words, the evaluation value of the real estate property entry 200 may be set to increase as the number of categories represented by the images 203, rather than the number of associated images 203, increases. In another example, processing such as evaluating or increasing the score of only images relating to the specifications of the real estate property, for example images showing the interior of the real estate property, such as the floor plan, the kitchen, the living room, the bathroom, and the toilet, and either not evaluating or reducing the score of other images, for example external views, local public facilities, local commercial facilities, roads, alphanumerical information, and miscellaneous images, may be executed so that the entry evaluation information 207 relating to the real estate property entries 200 that include a large number of categories of information that is useful for understanding the specifications (the interior specifications, for example) of the real estate property can be set at a high evaluation. The interior specifications may also include information that is unique to the real estate property, such as the construction material of the real estate property and design/construction methods.

The evaluation value may also be increased when the real estate property entry 200 includes a large number of images 203 representing the content of the real estate property indicated by the real estate property entry 200 in an easily understandable manner. More specifically, for example, the real estate property entries 200 with which a large number of images 203 relating to the floor plan and photographs of the interior are associated may be evaluated more highly than the real estate property entries 200 with which a large number of images 203 relating to the local environment, such as supermarkets and parks, are associated. Hence, the entry evaluation information 207 indicating the evaluation value evaluated in accordance with the objects shown on the images 203 associated with the real estate property entries 200 can be calculated on the basis of the object information 205.

By providing the entry evaluation information 207 in this manner, the real estate property entries 200 in which the specifications of the real estate property can be checked easily from the images 203 can be displayed at the top of the list of real estate property entries 200 when the list of real estate property entries 200 is output by the real estate property information provision server 100.

The enquiry number information 209 is information indicating a number of enquiries made by the users U with respect to each of the real estate properties represented by the real estate property entries 200. A number of requests for a brochure, a number of received telephone calls, a number of times the users U have accessed a details page of the real estate property entry 200, and so on, for example, may be included in the enquiry number information 209. Furthermore, the entry evaluation information 207 of the real estate property entries 200 may be calculated on the basis of the enquiry number information 209. Moreover, a review score or a number of reviews may be used in addition to, or instead of, the number of enquiries.

### (3. Functional configuration of real estate property information provision server 100)

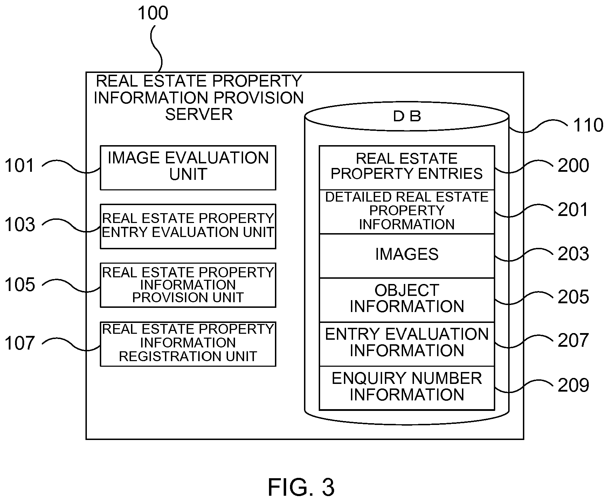

Next, referring to Fig. 3, a functional configuration of the real estate property information provision server 100 according to this embodiment will be described.

Fig. 3 is a functional block diagram showing a specific example of the functional configuration of the real estate property information provision server 100. The real estate property information provision server 100 includes an image evaluation unit 101, a real estate property entry evaluation unit 103, a real estate property information provision unit 105, a real estate property information registration unit 107, and the database (DB) 110.

Note that the respective functions of the real estate property information provision server 100 do not necessarily have to be realized by a single computer, and may be realized by a plurality of computers. More particularly, for example, the image evaluation unit 101 and the real estate property entry evaluation unit 103 may be realized by a different computer to the real estate property information provision unit 105 and the real estate property information registration unit 107.

The image evaluation unit 101 receives input of the images registered in the DB 110, and generates the object information 205 indicating the object shown on each image. The image evaluation unit 101 includes an evaluation model generated by machine learning such as deep learning, for example. As described above, to generate the evaluation model forming the image evaluation unit 101, the images 203 and a large amount of manually applied information indicating the object shown on each image (for example, the floor plan, photographs of the interior of the real estate property, such as the kitchen, the living room, the bathroom, and the toilet, photographs of shared spaces, photographs of the local environment, such as supermarkets, schools, and parks, and so on) are input as correct answer data. Note that this subject information may be attached to the images 203 manually by crowdsourcing, for example.

Using an evaluation model generated in the manner described above, the image evaluation unit 101 generates the object information 205 with respect to each of the images 203 registered in the DB 110. More specifically, when an image 203 is input into the image evaluation unit 101, the image evaluation unit 101 outputs a vector constituted by parameters indicating object resemblances of the image 203 in relation to each object. The image evaluation unit 101 then attaches either the vector indicating the object resemblances or tag information that is determined on the basis of the vector and expresses the object shown on the image 203 in the form of a character string to the image 203 as the object information 205.

The image evaluation unit 101 may also evaluate (specify) specifications (a form, a manufacturer, a product name, a model number, and so on) of the object (product) shown on the image 203. For example, with respect to an image 203 on which the object is a kitchen, the image evaluation unit 101 may evaluate specifications such as whether or not the kitchen is a system kitchen, an island kitchen, an L-shaped kitchen, product name XX manufactured by company YY, and so on. Further, with respect to a toilet, for example, the image evaluation unit 101 may identify whether or not the toilet is a flush valve tank toilet, a low tank toilet, a tankless toilet, and so on. Likewise for these determinations, an evaluation model may be generated by machine learning such as deep learning using image data tagged in advance with the type of product, for example, as correct answer data. The product information determined by the image evaluation unit 101 in this manner may be included in the object information 205.

The real estate property entry evaluation unit 103 evaluates each real estate property entry 200 on the basis of the images 203 associated with the real estate property entry 200, and registers an evaluation result in the DB 110 as the entry evaluation information 207. An evaluation model used by the real estate property entry evaluation unit 103 at this time to evaluate the real estate property entry 200 may be generated by a rule of thumb or by machine learning such as deep learning. An evaluation model generated in accordance with a rule of thumb may be designed such that, for example, when the real estate property entry 200 can be determined to include a large number of images 203 relating to interior photographs, the floor plan, and so on, the evaluation value is increased, and when, conversely, the real estate property entry 200 includes almost no interior photographs and the like and the proportion of images 203 such as photographs of the local environment is high, the evaluation value is reduced. In so doing, the evaluation of the real estate property entries 200 in which the users U cannot easily ascertain the appearance of the interior from the images can be lowered, and the evaluation of the real estate property entries 200 in which the appearance of the interior can be determined easily from photographs can be raised.

Alternatively, the evaluation of a real estate property entry 200 that includes images 203 relating to a large number of types of objects may be raised, irrespective of whether or not the images 203 relate to objects of specific types. More specifically, for example, it is easier for the users U to determine the appearance of the real estate property from a real estate property entry 200 including images 203 relating to various objects, such as the living room, the kitchen, the toilet, and the bathroom, than from a real estate property entry that includes a large number of images 203, the majority of which relate to the interior decoration of the living room. Accordingly, the real estate property entry evaluation unit 103 may be generated such that the real estate property entries 200 with which images 203 relating to a large number of types of objects are associated are evaluated highly.

Alternatively, an evaluation model may be generated by machine learning on the basis of the enquiry number information 209 associated with each real estate property entry 200, for example, such that the real estate property entries 200 that have similar features, for example similar image categories, similar image object specifications, and so on, to a real estate property entry 200 that has received a large number of enquiries are evaluated highly. In this case, for example, the evaluation model is generated by preparing a large amount of information associating the enquiry number information with the object information 205 or the order of the images 203 associated with the real estate property entry 200 as correct answer data. As a result, an evaluation model for evaluating a combination or an order of the images 203 with which a large number of enquiries can be received from the users U is generated. When this evaluation model is applied to the real estate property entry evaluation unit 103, the evaluation value of any registered real estate property entry 200 can be calculated from the types or the order of the images 203 of the real estate property entry 200. The real estate property entry evaluation unit 103 registers the evaluation values in the DB 110 as the entry evaluation information 207.

The real estate property information provision unit 105 provides a user interface function for providing the user U with real estate property information by exchanging data with the information terminal T. At this time, for example, the real estate property information provision unit 105 transmits a web page serving as a user interface to the information terminal T, whereupon the information terminal T displays the web page screen using a browser or the like, for example. Information input by the user U onto the screen is transmitted from the information terminal T to the real estate property information provision unit 105 of the real estate property information provision server 100. Further, when the list of real estate property entries 200 is to be output, for example, the real estate property information provision unit 105 generates the list of real estate property entries 200 on the basis of the entry evaluation information 207, for example. Thus, the real estate property entries 200 that match the conditions input by the user U, for example, can be arranged in descending order of the evaluation value represented by the entry evaluation information 207.

Further, on a details screen of a real estate property entry 200 selected by the user U, the real estate property information provision unit 105 can display a list of similar real estate property entries to the selected real estate property. At this time, when images in the "kitchen" category, for example, show a tendency to be viewed for a longer time than the other images of the subject real estate property that is displayed in detail, the real estate property information provision unit 105 can determine that the user U is focusing on the kitchen and output a list of real estate property entries 200 relating to real estate properties that have similar overall specifications, such as floor area and geographical location, but different objects in the "kitchen" category, for example. Note that although in this case, the category or object being focused on by the user is determined using the image viewing time, the determination may also be made by implementing machine learning using a viewing frequency or the like, for example, which is obtained by analyzing a search history operation log or the like generated by the user, as a teacher signal, or by displaying choices of categories or objects to the user and using a selection result input from input means.

At this time, the real estate property information provision unit 105 can realize this function by referring to the information relating to the specifications of the objects, included in the object information 205.

The real estate property information registration unit 107 receives registration of a new real estate property entry 200 by, for example, exchanging data with the information terminal T used by a user who is an estate agent or receiving input from the input interface provided in the real estate property information provision server 100. In relation to the input real estate property entry 200, for example, either the image evaluation unit 101 attaches the object information 205 to the images 203, or the real estate property entry evaluation unit 103 attaches the entry evaluation information 207.

Furthermore, at this time, the real estate property information registration unit 107 can evaluate the objects shown on the images 203 by having the image evaluation unit 101 evaluate the images 203 registered by the estate agent user. At this time, the user may be presented with tag information candidates such as "kitchen" and "bath" in relation to the registration subject images 203 in accordance with the evaluation results, and the user may select the tag information as desired. In this case, the real estate property information registration unit 107 registers the tag information selected by the user in the DB 110 as the object information 205.

The database 110 manages the real estate property entries 200 corresponding to the respective real estate properties. The detailed real estate property information 201, the images 203, the object information 205, the entry evaluation information 207, and the enquiry number information 209 associated directly or indirectly with the real estate property entries 200 in the DB 110 have already been described with reference to Fig. 2, and therefore further description thereof has been omitted.

### (4. Flow of processing executed by real estate property information provision server 100)

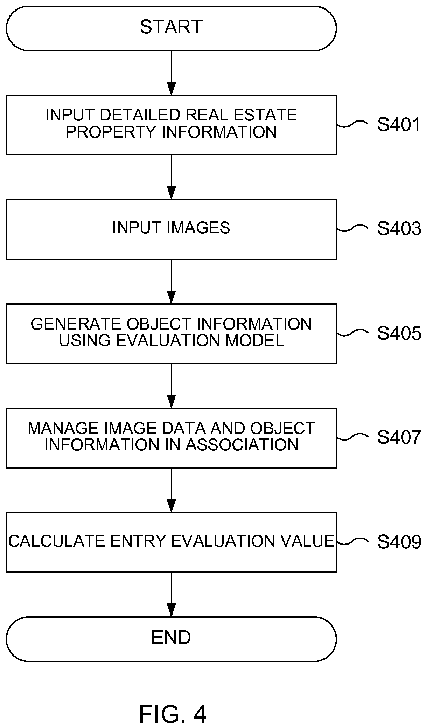

Referring to Figs. 4 to 6, a flow of the processing executed by the real estate property information provision server 100 will now be described. Figs. 4 to 6 are flowcharts showing a flow of the processing executed by the real estate property information provision server 100 according to this embodiment.

Note that as long as no inconsistencies occur in the processing content, the respective processing steps to be described below may be executed in an appropriately modified order or in parallel, and other steps may be added between the respective processing steps. Further, a step described for convenience as a single step may be executed after being divided into a plurality of steps, while steps described for convenience as a plurality of steps may be considered as a single step.

### (4.1. Flow of processing during registration of real estate property entry 200)

First, referring to Fig. 4, a specific example of a flow of the processing executed to register a new real estate property entry 200 will be described.

In a case where the real estate property entry 200 is registered by an estate agent user using the information terminal T, for example, the user U accesses the real estate property information provision server 100 from the information terminal T, for example, whereupon a web page pertaining to a registration screen for registering the real estate property entry 200 from the real estate property information provision server 100 is transmitted from the real estate property information provision server 100 to the information terminal T. Then, on the basis of input by the user onto the registration screen, the real estate property information provision server 100 receives input of the detailed real estate property information 201 and the images 203 from the information terminal T (S401 and S403).

The image evaluation unit 101 of the real estate property information provision server 100 generates the object information 205 indicating the objects shown on the images 203 upon reception of the input images 203 (S405). The image evaluation unit 101 associates the object information 205 with the images 203, and registers the object information 205 in the DB 110.

Further, on the basis of the object information 205 associated with the images 203, the real estate property entry evaluation unit 103 generates the entry evaluation information 207 indicating the number of images 203 included in the real estate property entry 200 that will be attractive to the user U and so on, and registers the entry evaluation information 207 in the DB 110 in association with the real estate property entry 200 (S409). As regards the determination as to whether or not an image 203 is attractive, or in other words satisfying, the image 203 is determined to be attractive when the length of time the user views the subject image exceeds a predetermined reference time, for example.

Note that by sequentially analyzing the images 203 registered by the user, the real estate property information registration unit 107 may suggest an arrangement sequence of the images 203 or the like to the user. In this method, for example, the image evaluation unit 101 evaluates the registered images 203 to determine the objects shown on the images 203, and then presents the user with information indicating the objects. Alternatively, this method can be realized by having the real estate property entry evaluation unit 103 determine, by learning, an order or a combination of the images 203 with which the evaluation value applied to the real estate property entry 200 increases, and having the real estate property information registration unit 107 present the user with this order or combination on a web page that is transmitted to the information terminal T.

### (4.2. Flow of processing during output of real estate property list)

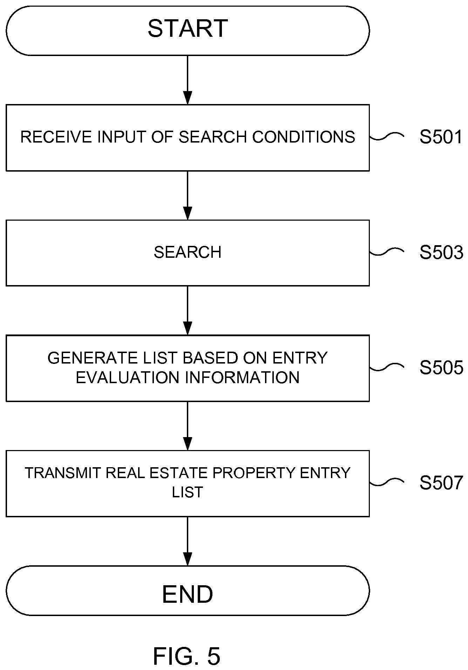

Next, referring to Fig. 5, a specific example of a flow of the processing executed to output a list of the real estate property entries 200 will be described.

In a case where a user U searching for a real estate property searches for a real estate property, for example, the user U accesses the real estate property information provision server 100 using the information terminal T, for example, whereupon a web page pertaining to a search condition input screen is transmitted from the real estate property information provision server 100 to the information terminal T. Then, on the basis of input by the user U onto the search condition input screen, the real estate property information provision unit 105 of the real estate property information provision server 100 receives input search conditions (S501).

On the basis of the search conditions received from the information terminal T, the real estate property information provision unit 105 of the real estate property information provision server 100 extracts real estate property entries 200 matching the conditions from the real estate property entries 200 registered in the DB 110 (S503). Further, the real estate property information provision unit 105 generates a real estate property entry list by arranging the extracted real estate property entries 200 on the basis of the entry evaluation information 207 (S505). In so doing, real estate property entries 200 including a large number of types of images 203 from which the user can check the specifications of the real estate property, or in other words the appearance of the interior, for example, can be positioned at the top of the real estate property entry list.

The real estate property information provision unit 105 transmits the generated real estate property entry list to the information terminal T operated by the user U (S507).

### (4.3. Flow of processing during output of real estate property list partially including different specifications)

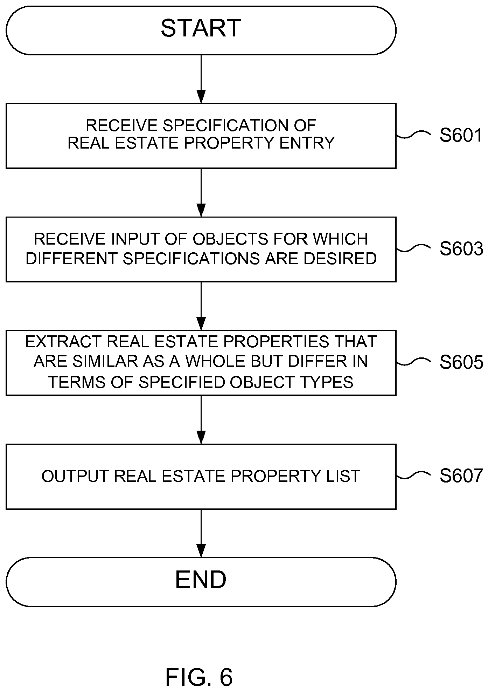

Referring to Fig. 6, a specific example of a flow of processing executed to output a list of the real estate property entries 200 on which the specifications relating to some of the objects are different will be described.

First, when the user U selects a certain specific real estate property entry 200 (S601), the real estate property information provision unit 105 transmits a web page pertaining to a details screen relating to the real estate property entry 200 to the information terminal T. Further, in response to a specification from the user U or the like, the real estate property information provision unit 105 receives specified categories of objects (kitchen, toilet, bath, or the like, for example) for which the user U desires different specifications to those of the real estate property entry 200 currently displayed in detail (S603). Note that instead of specifying the objects in this manner, the objects may be specified automatically by determining whether or not a degree of user satisfaction is high.

The real estate property information provision unit 105 refers to the detailed real estate property information 201 and the object information 205 in accordance with the specified objects, and extracts real estate property entries 200 in which the real estate properties as a whole, i.e. the floor space, the closest train station, and so on, for example, have a high degree of similarity, but the specifications of the specified objects are different or similar (S605). The division between similar and different specifications can be set by executing the processing of step S603. The similar and different specifications are received at the same time as the specified objects are received. In a case where the objects are specified automatically, the similar and different specifications are set in advance as specifications of the system. The real estate property information provision unit 105 then transmits a list of the resulting real estate property entries obtained in step S605 to the information terminal T (S607).

### (5. Hardware configuration)

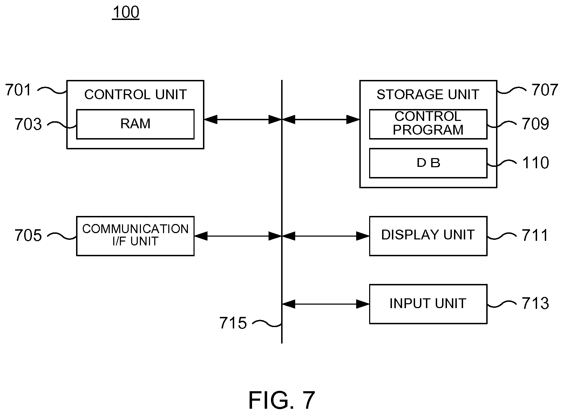

Referring to Fig. 7, a hardware configuration of the real estate property information provision server 100 will be described. As shown in Fig. 7, the real estate property information provision server 100 includes a control unit 701, a communication interface (I/F) unit 705, a storage unit 707, a display unit 711, and an input unit 713, the respective units being connected to each other via a bus line 715.

The control unit 701 includes a CPU (Central Processing Unit, not shown), a ROM (Read Only Memory, not shown), a RAM (Random Access Memory) 703, and so on. The control unit 701, as well as functioning as a general computer, is configured to be capable of executing the processing relating to the real estate property information provision service described above by executing a control program 709 stored in the storage unit 707. For example, the image evaluation unit 101, the real estate property entry evaluation unit 103, the real estate property information provision unit 105, and the real estate property information registration unit 107 described above with reference to Fig. 3 are stored temporarily in the RAM 703, and can be realized as the control program 709 when the control program 709 is operated by the CPU.

Further, in addition to code included in the control program 709, the RAM 703 temporarily holds all or a part of the DB 110 storing the real estate property entries 200, the detailed real estate property information 201, the images 203, the object information 205, the entry evaluation information 207, and the enquiry number information 209 shown in Fig. 3. Furthermore, the RAM 703 is used as a working area when the CPU executes the various types of processing.

The communication I/F unit 705 is a device for implementing data communication with an external device, including the information terminal T, over the wired or wireless network N. The communication I/F unit 705 implements all of the communication between the respective function blocks shown in Fig. 3, such as the real estate property information provision unit 105 and the real estate property information registration unit 107, and the information terminal T.

The storage unit 707 is a nonvolatile storage medium such as an HDD (Hard Disk Drive) or a flash memory, for example. The storage unit 707 stores an operating system (OS) for realizing the functions of a general computer, as well as applications and data (not shown). The storage unit 707 also stores the control program 709 and the DB 110. As described above, the control program 709 includes the image evaluation unit 101, the real estate property entry evaluation unit 103, the real estate property information provision unit 105, and the real estate property information registration unit 107 shown in Fig. 3.

**The** DB 110 can include various data required by the real estate property information provision service, for example the real estate property entries 200, the detailed real estate property information 201, the images 203, the object information 205, the entry evaluation information 207, the enquiry number information 209, and so on shown in Figs. 2 and 3. The various data included in the DB 110 are loaded onto the RAM 703 or the like as required, and referred to by the CPU included in the control unit 701.

The display unit 711 is a display device for displaying information to a manager. Specific examples of the display unit 711 include a liquid crystal display, an organic EL (Electro-Luminescence) display, and so on, for example. The input unit 713 is a device for receiving input from the manager. Specific examples of the input unit 713 include a keyboard, a mouse, a touch panel, and so on.

Note that the real estate property information provision server 100 does not necessarily have to include the display unit 711 and the input unit 713. Further, the display unit 711 and the input unit 713 may be connected to the real estate property information provision server 100 from the outside via various types of interfaces such as a USB (Universal Serial Bus) or a display port.

### (6. Effects of this embodiment)

In the real estate property information provision system 1 according to this embodiment, as described above, real estate property information including images representing, in a favorable manner, specifications of the real estate property that are required by the user to study the real estate property can be presented to the user preferentially on the basis of the images 203 associated with the real estate property entries 200. More specifically, for example, by attaching the object information 205 indicating the objects shown on the images 203 to the images 203, the real estate property entries 200 including images 203 that allow the user U to ascertain the details of the real estate property more easily can be displayed at the top of the list on the basis of the object information 205.

Further, by attaching information indicating the specifications of the objects to the object information 205, a list of real estate property entries 200 relating to other real estate properties having different specifications with respect to a specific object, for example, can be generated and presented to the user U.

### (7. Remarks)

Note that the configurations of the embodiment described above may be combined or partially replaced. Further, the configuration of the present invention is not limited only to the above embodiment, and various amendments may be added thereto within a scope that does not depart from the spirit of the present invention. Reference Signs List

- 1: Real estate property information provision system
- 100: Real estate property information provision server
- 101: Image evaluation unit
- 103: Real estate property entry evaluation unit
- 105: Real estate property information provision unit
- 107: Real estate property information registration unit
- 110: Database
- 200: Real estate property entry
- 201: Detailed real estate property information
- 203: Image
- 205: Object information
- 207: Entry evaluation information
- 209: Enquiry number information
- 701: Control unit
- 703: RAM
- 705: Communication interface unit
- 707: Storage unit
- 709: Control program
- 711: Display unit
- 713: Input unit
- 715: Bus line
- N: Network
- T: Information terminal
- U: User

## Claims

1. An information processing system comprising:
means for managing a plurality of images relating to a real estate property together with image evaluation information that represents objects shown on the images and is attached thereto using a first evaluation model generated by machine learning;
means for managing entry evaluation values that relate to entries respectively representing a plurality of real estate properties, and are calculated using one or more pieces of the image evaluation information associated with each of the plurality of real estate properties; and
means for outputting a list of the entries relating to the plurality of real estate properties, an order of the entries on the list being determined in accordance with the entry evaluation values.

2. The information processing system according to claim 1, wherein the first evaluation model is generated by machine learning using the images to which the information indicating the objects is attached.

3. The information processing system according to claim 1 or 2, wherein the entry evaluation values are calculated using a second evaluation model generated by machine learning.

4. The information processing system according to claim 3, wherein the second evaluation model is generated using the image evaluation information associated with the one or more images associated with each entry.

5. The information processing system according to claim 3, wherein the second evaluation model is generated by machine learning using information about the entries representing the real estate properties, information relating to the one or more images associated with each real estate property, and a number of enquiries made by a user in relation to each real estate property.

6. An information processing system comprising:
means for managing a plurality of images relating to a real estate property together with image evaluation information that represents objects shown on the images and is attached thereto using an evaluation model generated by machine learning;
means for managing a plurality of entries respectively representing a plurality of real estate properties with which images to which the image evaluation information is attached are associated; and
means for outputting a list of the plurality of entries including images that relate to another real estate property and show an object of a specific category on the basis of the image evaluation information.

7. The information processing system according to claim 6, wherein the evaluation model is generated by machine learning using the images to which the information indicating the objects is attached.

8. An information processing method executed by an information processing system, the information processing method comprising the steps of:
managing a plurality of images relating to a real estate property together with image evaluation information that represents objects shown on the images and is attached thereto using a first evaluation model generated by machine learning;
managing entry evaluation values that relate to entries respectively representing a plurality of real estate properties, and are calculated using one or more pieces of the image evaluation information associated with each of the plurality of real estate properties; and
outputting a list of the entries relating to the plurality of real estate properties, an order of the entries on the list being determined in accordance with the entry evaluation values.

9. An information processing method executed by an information processing system, the information processing method comprising the steps of:
managing a plurality of images relating to a real estate property together with image evaluation information that represents objects shown on the images and is attached thereto using an evaluation model generated by machine learning;
managing a plurality of entries respectively representing a plurality of real estate properties with which images to which the image evaluation information is attached are associated; and
outputting a list of the plurality of entries including images of an object that is in a specific category and has different specifications on the basis of the image evaluation information.
